# EUROPEAN PATENT SPECIFICATION

(11) **EP 3 507 533 B1**
(45) Date of publication and mention of the grant of the patent: **08.06.2022**
(21) Application number: 16924603.0
(22) Date of filing: 24.12.2016
(51) Int. Cl.: F16L 37/18

(54) **SAFETY CAM LOCK FITTING AND METHOD**
SICHERHEITSNOCKENVERRIEGELUNGSFITTING UND VERFAHREN
RACCORD DE SÉCURITÉ À VERROU À CAME ET PROCÉDÉ

(43) Date of publication of application: 10.07.2019
(73) Proprietor: Hartman, Jeffrey, Mobile, AL 36619 (US); Williamson, George, L., Fairhope, AL 36533 (US)
(72) Inventor: Hartman, Jeffrey, Mobile, AL 36619 (US); Williamson, George, L., Fairhope, AL 36533 (US)
(74) Representative: Sach, Greg Robert
(86) International application number: PCT/US2016/000133
(87) International publication number: WO 2018/117995

(56) References cited:
- DE-U1-202016 101 017
- US-A- 3 439 942
- US-A- 4 802 694
- US-A- 5 904 380
- US-A1- 2001 045 745
- US-A1- 2008 302 204
- US-A1- 2011 095 525
- US-A1- 2011 316 272
- US-A1- 2013 106 095
- US-A1- 2014 188 627

## Description

### Technical Field

The present invention relates generally to cam lock fittings and, more particularly, is concerned with a cam lock fitting having a pair of double cam levers providing a safety lock and a lever latching mechanism thereon.

### Background Art

Cam lock fittings having double cam levers have been described in the related art, and, cam lock fittings having safety features have been described in the related art. However, none of the related art devices disclose the unique features of the present invention. U.S. Patent No. 4,802,694 to Vargo, dated February 7, 1989, disclosed a quick-disconnect coupling, including a female coupler carrying a sleeve provided with a pair of openings therethrough, and which had a locking handle mounted on each opening for pivotation about a horizontal axis. Each locking handle carried a camming head disposed at a location to project through the opening in the sleeve. The coupling further included a tubular male adapter dimensioned for insertion into the sleeve and carrying an annular groove disposed at a location to afford alignment with the camming heads. The sleeve also carried at the location of each opening, a spring-biased safety lever handle which also carried a camming head aligned with the annular groove. U.S.

Patent No. 8,955,885 to Dixon, dated February 17, 2015, disclosed a hose coupling locking mechanism. U.S. Patent No. 8,172,271 to Dixon, dated May 8, 2012, disclosed a hose coupling locking mechanism. U.S. Patent No. 6,543,812 to Chang, dated April 8, 2003, disclosed a self-locking quick release coupler adapted to a groove adapter. U.S. Patent No. 5,904,380 to Lee, dated May 18, 1999, disclosed a pipe joint. U.S. Patent No. 5,791,694 to Fahl, et al., dated August 11, 1998, disclosed a lock for coupling cam arms. U.S. Patent No. 3,439,942 to Moore, et al., dated April 22, 1969, disclosed a retaining member for coupling. U.S. Patent No. 6,095,190 to Wilcox, et al., dated August 1, 2000, disclosed a coupling with a female half having internal pressure relief. U.S. Patent No. 5,863,079 to Donais, et al., dated January 26, 1999, disclosed a quick-connect, disconnect coupling. U.S. Patent No. 5,595,217 to Gillen, et al., dated January 21, 1997, disclosed a dry break coupling assembly with a cam locking connection system. U.S. Patent No. 5,234,017 to Aflin, et al., dated August 10, 1993, disclosed a restrictor valve for metered liquid dispensing system. U.S. Patent No. 4,538,632 to Vogl dated September 3, 1985, disclosed a shut-off valve for a fuel truck or tanker drain off having down spouts. U.S. Patent 4,269,215 to Odar dated May 26, 1981, disclosed a vapor flow control valve. U.S. Patent No. 3,1860,274 to Ledstrom, et al., dated January 14, 1975 disclosed a pipe coupling. U.S. Patent No. 4,222,593 to Lauffenburger disclosed a fluid conveying coupling with safety locking device. U.S. Patent No. 8,123,256 to Hartman dated February 28, 2012 disclosed a safety lock for a cam lock fitting. U.S. Patent No. 7,147,004 to Hartman dated December 12, 2006 disclosed a check valve for a cam lock fitting. U.S. Patent No. 3,383,123 to Murray dated May 14, 1968 disclosed a line pressure responsive safety coupling. U.S. Patent No. 5,338,069 dated August 16, 1994 to McCarthy disclosed a positively locking quick release coupling. U.S. Patent No. 8,632,103 dated January 21, 2014 to Fahie, et al. disclosed a lock for cam and groove coupler. U.S. Patent No. 3,124,374 dated March 10, 1964 to Krapp disclosed a self venting separable coupling with lock. U.S. Patent No. 5,295,717 dated March 22, 1994 to Chen disclosed a tube connecting device that disclosed a lever latching mechanism. U.S. Patent No. 5,435,604 dated July 25, 2995 to Chen disclosed a tube connecting device that disclosed a lever latching mechanism. U.S. Patent No. 8,083,265 dated December 27, 2011 to Chen disclosed a tube connecting device that disclosed a lever latching mechanism. While these devices related to cam lock fittings may be suitable for the purposes for which they were designed, they would not be as suitable for the purposes of the present invention, as hereinafter described. As will be shown by way of explanation and drawings, the present invention works in a novel manner and differently from the related art.

### Disclosure of the Invention

The present invention discloses an improved cam lock fitting having cooperating double cam levers having outer and inner portions so that when the outer cam levers are opened and the inner cam lever remain closed, the male and female portions of the cam lock fitting only slightly separate from each other allowing the operator to quickly reclose the cam lock fitting if the operator observes that the cam lock fitting still contains pressurized material. This is accomplished by providing a larger cam lobe on the outer cam lever and a fork shaped smaller cam lobe on the inner cam lever so that after the outer cam lever has been opened and the smaller cam lobe is in a closed position and protrudes into the peripheral groove on the male portion, the male and female ends have a small space therein between which allows the operator to visually observe any pressurized material so that the operator can quickly reclose the fitting. Also disclosed is an embodiment which provides an automatic lever latching mechanism that must be unlatched before the cam levers can be opened thereby preventing the cam levers from being inadvertently opened.

A major problem sought to be solved by the present invention occurs at the time an operator of a conventional prior art cam lock fitting undertakes the operation of opening the fitting; at that time, the operator may not know whether the contents of the conventional fitting are still under pressure, and if the contents are still under pressure the contents will spew out when the conventional fitting is opened possibly resulting in injury to the operator or an unwanted release of materials to the environment. The present invention solves this problem by allowing the improved cam lock fitting to be only partially opened by means of a safety lock feature which allows the improved fitting to be reclosed if the operator observes that the contents inside the improved fitting remain pressurized.

An object of the present invention is to provide a cam lock fitting having a pair of cooperating double cam lock levers thereon. A further object of the present invention is to provide a safety lock which can be easily operated by a user as a part of the normal operation of a cam lock fitting. A further object of the present invention is to provide a safety lock which will remain locked when the cam lock fitting is pressurized. A further object of the present invention is to provide a safety lock on a cam lock fitting which will prevent inadvertent pressurized discharges of environmentally damaging material from the cam lock fitting. A further object of the present invention is to provide a safety lock on a cam lock fitting which is simply constructed and which can be relatively inexpensively manufactured. A further object of the present invention is to provide a cam lock fitting having a pair of cooperating double cam lock levers having a lever latching mechanism thereon.

A major advantage of the preset invention is that the cam members are disposed substantially 180 degrees apart and therefore all forces related to associated stress or torque resulting from using the cam members are evenly distributed around a cam lock fitting designed according to the teachings of the present invention. Conventional cam lock fittings using side-by-side cam members would not be expected to exhibit this characteristic.

The foregoing and other objects and advantages will appear from the description to follow. In the description, reference is made to the accompanying drawings, which form a part hereof, and in which is shown by way of illustration specific embodiments in which the invention may be practiced. These embodiments will be described in sufficient detail to enable those skilled in the art to practice the invention, and it is to be understood that other embodiments may be utilized and that structural changes may be made without departing from the scope of the present invention. In the accompanying drawings, like reference characters designate the same or similar parts throughout the several views. The following detailed description is, therefore, not to be taken in a limiting sense, and the scope of the present invention is defined by the appended claims.

### Brief Description of Drawings

Figure 1 is a perspective view of a prior art cam lock fitting.
Figure 2 is a perspective view of a first embodiment of the present invention.
Figure 3 is a perspective view of a second embodiment of the present invention.
Figure 4 is an exploded perspective view of a first embodiment of the present invention.
Figure 5 is a perspective view of the double cam lever of a first embodiment of the present invention.
Figure 6 is an exploded perspective view of a second embodiment of the present invention.
Figure 7 is a perspective view of the double cam lever of a second embodiment of the present invention.
Figures 8-10 are sectional views of a first embodiment of the present invention with certain parts shown in perspective for ease of illustration.
Figures 11-13 are sectional views of a second embodiment of the present invention with certain parts shown in perspective for ease of illustration.
Figure 14 is an end elevation view taken from the front of portions of a first embodiment of the present invention.
Figure 15 is an end elevation view taken from the front of portions of a second embodiment of the present invention.
Figure 16 is a side elevation view of the double cam lever of a first embodiment of the present invention.
Figure 17 is a side elevation view of the double cam lever of a second embodiment of the present invention.
Figure 18 is a side elevation view of the double cam lever of an alternative embodiment of the present invention.
Figure 19 is a top view on the inner cam lever of a first embodiment of the present invention.
Figure 20 is an exploded perspective view of a lever latching embodiment of the present invention.
Figure 21 is a perspective view of a lever latching embodiment of the present invention.
Figure 22 is a perspective view of an alternative lever latching embodiment of the present invention.
Figures 23-24 are side elevation views of a lever latching embodiment of the present invention with certain parts shown cut-away for ease of illustration.
Figure 25 is a top view of the double cam lever of an alternative embodiment of the present invention.

### Best Mode for Carrying Out the Invention

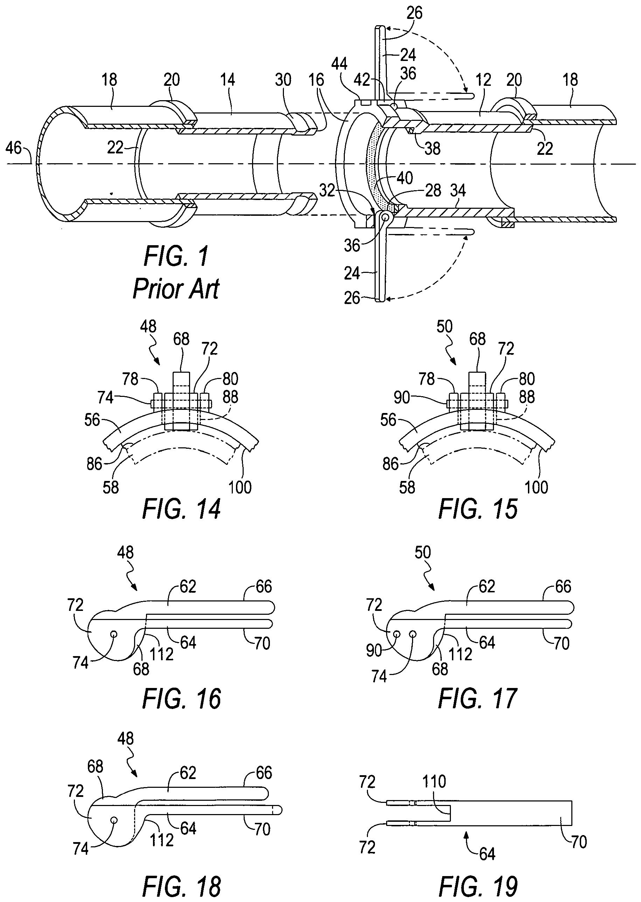

Turning now descriptively to the drawings, Figures 1 through 25 illustrate the present invention wherein a cam lock fitting having a pair of double cam levers which cooperate to provide a safety locking mechanism is disclosed.

Turning to Figure 1, therein is shown a prior art version of a conventional cam lock fitting generally indicated by reference number 10 having a female end coupling portion or conduit 12 and a male end coupling portion or conduit 14 each having a front end 16 which when joined together form a conduit through which fluid or the like will flow. A hose 18 having a band clamp 20 thereon is attached to a rear end 22 of each female 12 and male 14 portions; hose 18 ranges in size from about one inch to about 8 inches and are generally heavy for accommodating relatively high pressure. The female portion 12 has a pair of cam levers or ears 24 each having a lever portion 26 and a cam portion 28 thereon, which cam portion locks the female end 12 to the male end 14 by seating the cam portion 28 of the female portion within a peripheral groove 30 on an exterior of the male portion so that the two portions 12, 14 with hoses 18 are joined together to form a conduit so that materials can pass therethrough. The cam portion 28 projects through an opening 32 in the wall 34 near the front end 16 of the female portion 12 as the ears 24 pivot on axles 36. Direction arrows are used to show movement of ears 24 between a closed position lying substantially parallel to and adjacent the female portion 12 and an open position outwardly moved away from the female portion 12 so as to disengage the cam portion from groove 30. Also shown on the inside of the female portion 12 is annular flange 38 having a flexible circular gasket or O-ring seal 40 therein wherein the flange and gasket extend entirely around the internal periphery of the female portion for making sealing contact with the end 16 of the male end portion 14 in a conventional manner. The ears 24 are each mounted onto an axle 36 extending through first, left and second, right bosses 42, 44 disposed on opposite sides of the female coupling 12. Centerline 46 of cam lock fitting 10 is also shown. A major disadvantage of the prior art cam lock fitting 10 is that it is designed to be either completely closed or completely open and therefore offers no safety locking mechanism.

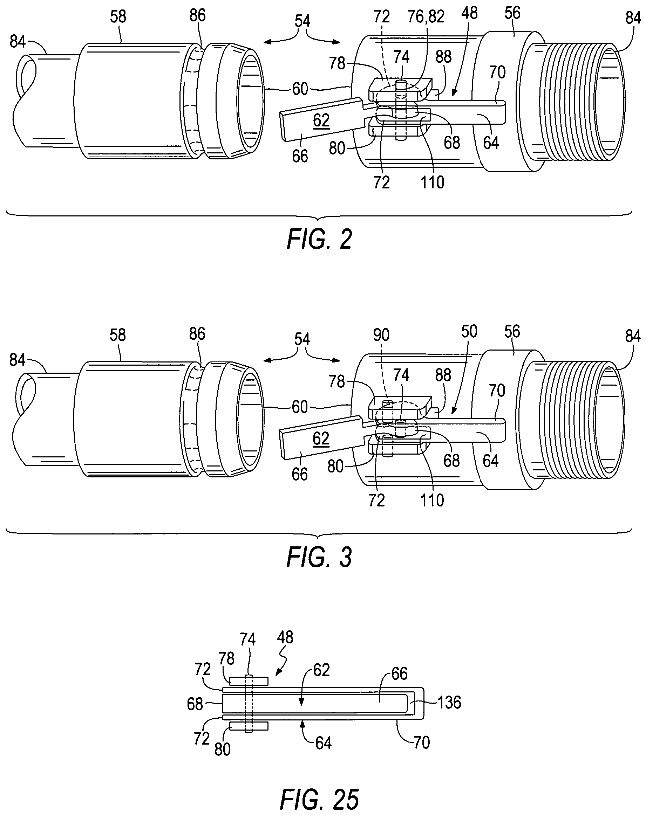

Turning to Figures 2-3, therein are shown two embodiments 48, 50 of an improved cam lock fitting 54 of the present invention wherein Figure 2 shows embodiment 48 and Figure 3 shows embodiment 50. Figures 2-3 show a cam lock fitting 54 similar in some respects to the prior art cam lock fitting 10, shown in Figure 1, but with important differences due to the embodiments 48, 50 mounted thereon. Therein is shown a cam lock fitting 54 having a female end coupling portion or conduit 56 and a male end coupling portion or conduit 58 each having a front end 60 which when joined together form a conduit through which fluid or the like will flow. The present invention operates similarly to the prior art am lock fitting 10 shown in Figure 1 except that there are a total of four cam levers (i.e., two pairs of double cam levers/ears) instead of two cam levers wherein the double cam levers cooperate with each other to provide a safety lock. Each of the cam lock fittings 54 shown in Figures 2-3 are similar to each other, however, different embodiments 48, 50 of cam lock levers are mounted thereon.

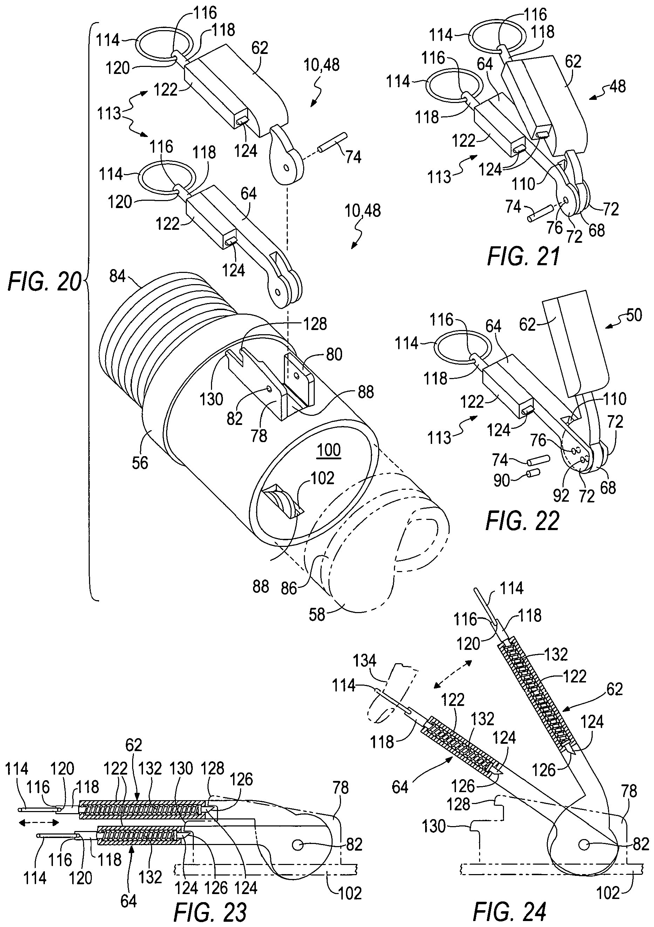

Turning to Figure 2, therein is shown the preferred embodiment 48 having a pair of double cam levers or members 62, 64 mounted on opposite sides of the female end portion 56 wherein each pair has an outer cam lever 62 and an inner cam lever 64. Outer cam lever 62 has a lever portion 66 and an eccentric cam lobe portion 68, and, inner cam lever 64 also has a lever portion 70 and first and second eccentric cam lobe portion 72 wherein the first and second cam lobe portions form the two prongs of a fork shaped portion being spaced apart a distance thereby creating a cutout or space 110 sufficient to allow the cam lobe portion 68 to fit therein between the two prongs which causes the inner and outer cam levers 62, 64 to be disposed symmetrically about the female end portion 56 which assures smooth operation throughout the life span of a cam lock fitting 54 made according to the teachings of the present invention. The cam lobe portion 72 resembles a fork shape when viewed from the top (see Figure 19) wherein the two similar first and second prongs /branches of the fork have cam lobe 68 disposed therein between in space 110; of course, the positions of the lobes 68, 72 could be reversed relative to each other wherein the larger lobe portion 68 could be manufactured as the forked portion 72 so that the smaller lobe portion would be disposed on the inside of the larger forked portion as shown in Figure 18. The lever portion 66 of the outer cam ear 62 is larger, i.e., wider, than the lever portion 70 of the inner cam ear 64 so that it will be easier to grasp in the hands of an operator; also, the inner cam ear is not intended to be opened until after the outer cam ear is opened and having a wider outer ear helps accomplish this objective. A lever latching mechanism 113 for use with lever 62, 64 is described in Figures 20-24.

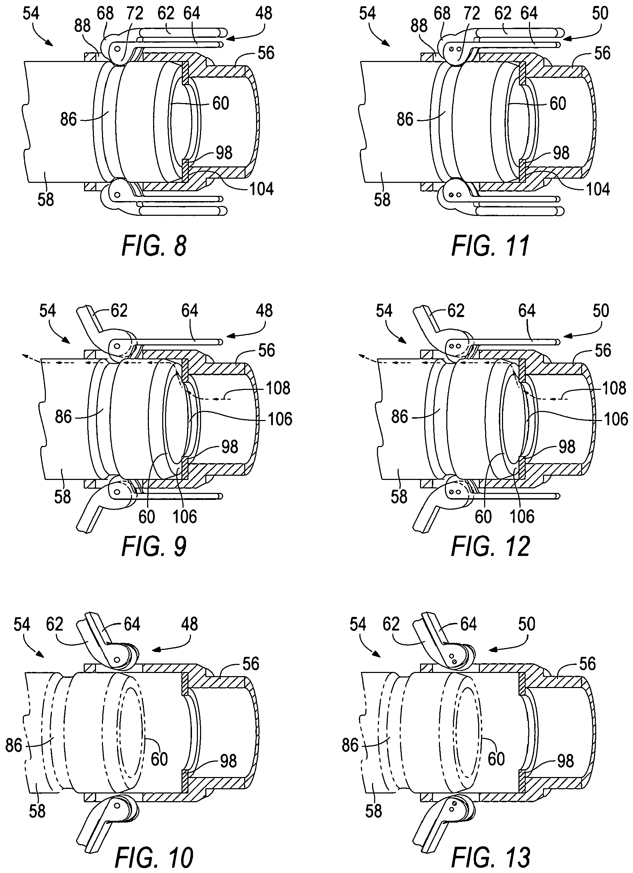

A single axle 74 passes through a substantially centrally disposed aperture 76 of cam lobe portion 68, 72 and the ends of the axle are carried on first and second bosses 78, 80 by passing through an aperture 82 of each boss. The male and female end portion 56, 58 each have a rear end portion 84 and the male end portion has an external peripheral groove 86 thereon. The female end portion 56 has openings 88 in the opposing walls thereof through which cam lobes 68, 72 pass. Cam lobe portion 68 of outer cam ear 62 is configured differently and may be larger than cam lobe portion 72 of inner cam ear 64, as best shown on Figures 8-10 and Figure 16, so that when the outer and inner ears 62, 64 are closed the cam lobe portion 68 fits in or engages groove 86 so as to completely sealingly close or connect the male end portion 58 to the female end portion 56 because cam lobe 68 is substantially the same size and shape of the groove 86. This is due to cam lobe 68 being effectively configured, in size or shape, so as to engage groove 86 in such a way to cause the end 60 of male conduit 58 to move axially into a sealing position relative to the sealing gasket inside female conduit 56. In contrast, when the outer cam ear 62 with cam lobe 68 is opened and the smaller cam lobe 72 is unopened, the male end portion 58 becomes slightly loosened or separated from the female end portion 56 to allow a space to form between the front end 60 of the male end portion 58 and the female end portion 56 as best shown and explained relative to Figures 8-13, because smaller cam lobe 72 being smaller, i.e., being configured differently, than groove 86 doesn't completely fill groove 86 being loose fit thereby causing a slight space to form between front end 60 and the female end portion 56 as previously disclosed.

In summary of Figures 2-3, the female portion 56 has a pair of double cam levers or ears 48, each having an outer and inner lever portion 66, 70 and a cam portion 68, 72 thereon, which cam portion locks the female end 56 to the male end 58 by seating the cam portions 68, 72 of the female portion within a groove 86 on the male portion so that the two portions are joined together. The cam portions 62, 64 project through an opening 88 in the wall near the end 60 of the female portion 56 as the ears 62, 64 pivot on axle 74. Also included in the female portion 56 is a gasket or O-ring seal 98 therein wherein the gasket extends entirely around the internal periphery of the female portion for making sealing contact with the end 60 of the male end portion 58 in a conventional manner as shown in Figures 8-13. The ears 62, 64 are each mounted onto an axle 74 extending through a first and second boss 78, 80 mounted on opposite sides of female coupling 56. The inner and outer ears 62, 64 each move between a first downward closed position lying substantially parallel to and adjacent the female portion 56 to a second upward open position outwardly moved away from the female portion so as to disengage the cam portion 68, 72 from groove 86.

In order for an operator to open a cam lock fitting 54 designed according to the teachings of the present invention, the operator must first move the outer cam lever 62 from the first downward closed position to the second upward open position so that larger cam lobe 68 is moved away from groove 86 so as to partially open the cam lock fitting 54 so as to partially relieve internal pressure contained inside the cam lock fitting. If there is no pressure remaining in the cam lock fitting 54 the operator can continue with the next step of opening the second inner cam lever 64 to thereby separate the male and female conduit portions 58, 56 just as previously explained relative to embodiment 48 of Figure 2. However, if there is still pressure inside the cam lock fitting 54 when the first outer cam lever 62 is opened, the operator will immediately reclose that first outer cam lever 62 so as to pull the male end portion 58 back into the locked position inside female end portion 56 so as to reclose and reseal the cam lock fitting. Pressure remaining inside cam lock fitting 54 could be indicated by the sound of escaping gas, a hissing sound, seepage, leaking or gurgling liquid or the like.

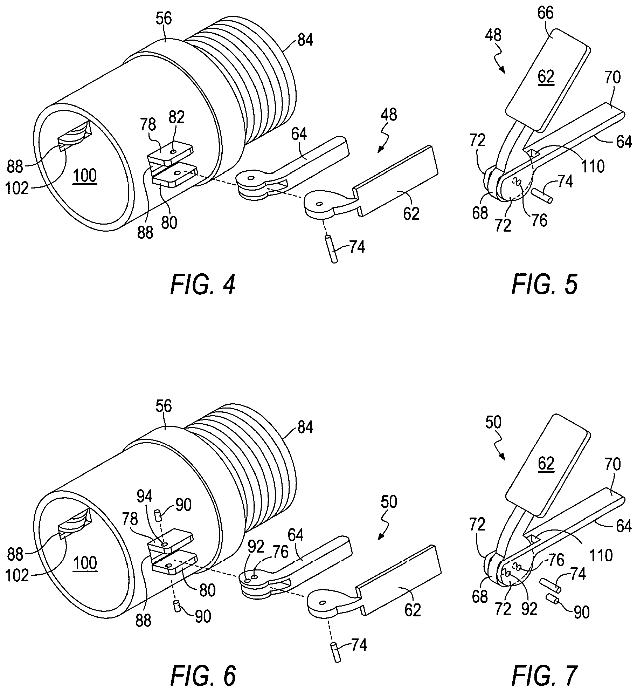

Turning to Figure 3, therein is shown a view similar to Figure 2 except that another embodiment 50 of the double cam lever is shown having double axles 74, 90. The female and male end portions 56, 58 are essentially the same as shown in Figure 2 with the main difference being that inner cam ear 64 is mounted onto bosses 78, 80 using axle 90 in aperture 92 which axle 90 is offset from the center of lobe 72 toward the front end 60 of the female end portion 56 so as to be disposed toward the front ends of bosses 78, 80 in aperture 94 as best shown on Figures 6-7. Axle 90 and apertures 92,94 are co-aligned as shown in Figure 6. In this configuration, while outer cam ear 62 pivots on substantially centrally disposed axle 74 on cam lobe 72, it is carried with and moves outwardly with inner cam ear 64 by having cam lobe portion 72 pivot on offset axle 90 which is better illustrated in Figure 6-7 and 11-13. The operation of embodiment 50 is similar to embodiment 48 and the steps of operation have been previously disclosed relative to embodiment 48 of Figure 2.

Turning to Figures 4 and 6, the two embodiments 48, 50 of an improved cam lock fitting of the present invention are exploded away from a female end portion 56; wherein Figure 4 shows embodiment 48 and Figure 6 shows embodiment 50. Shown therein is the inside 100 of the female coupling 56 along with the double cam levers 48, 50 on opposite sides of the female end portion 56 showing the bosses 78, 80 on the female coupling 56. Note that the openings 88 are sized and shaped to accommodate movement of the cam lobes of the present invention. The bosses 78, 80 are attached onto the outside of the female coupling 56 in the conventional manner. Previously disclosed elements are also shown as were discussed relative to the respective embodiments 48, 50 of Figures 2-3.

Turning to Figures 5 and 7, an enlarged view of the cam portions of the two embodiments 48, 50 are shown illustrating the features of the two embodiments as previously disclosed relative to the respective embodiments 48, 50 of Figures 2-3. Figure 5 shows single axle embodiment 48 and Figure 7 shows a double axle embodiment 50. Previously disclosed elements are also shown as were discussed relative to the respective embodiments 48, 50 of Figures 2-3.

Turning to Figures 8-13, therein is shown the steps of operation of the two embodiments 48, 50 of an improved cam lock fitting 54 designed according to the teachings of the present invention wherein Figures 8-10 shows embodiment 48 and Figures 11-13 shows embodiment 50. For each embodiment 48, 50 therein is shown the movement of the male end portion 58 relative to the female portion 56 as the cam lock fitting 54 of the present invention is being opened; the steps would be reversed for closure of the cam lock fitting. Figures 8 and 11 show the male end portion 58 connected to and mated tightly to the female portion 56 as would be the condition when the cam lock fitting 54 is in a sealed position with double cam lever 62, 64 in a downward closed position so that the end 60 of the male end portion 58 is tightly sealingly engaged against the front side of circular gasket 98 of the female end portion 56 with the lobes 68, 72 in groove 86; also, the rear side of gasket 98 is tightly sealed against the front surface of the inner flange 104 of the female end portion 56.

In contrast, Figures 9 and 12 shows the larger cam lobe of outer cam lever 62 in the open position and shows the smaller cam lobe 72 of inner cam lever 64 remaining in the groove 86 and also shows the male end portion 58 with a small space 106 being defined in between its end 60 and the gasket 98 which would occur when the outer cam lever 62 is in an upward open position which would cause the ends 60 of female end portion 56 and male end portion 58 to slightly separate thereby allowing the release of pressure or a small amount of material as indicated by arrows 108 from the inside of the female portion 56 of the cam lock fitting 54. Arrows 108 illustrate material/fluid moving into space 106 and then out the fitting 54 by escaping between the male and female couplings 58, 56. Figures 10 and 13 illustrate that the male end 58 can only be completely released from the female end 56 when the outer and inner cam levers 62, 64 are moved to the open position and when this occurs, each of the lobes 68, 72 become disengaged from groove 86 to allow the male 58 and female 56 end to be completely separated from each other. Previously disclosed elements may also be shown.

Turning to Figures 14-15, the two embodiments 48, 50 of an improved cam lock fitting of the present invention are shown mounted on a female end portion 56 also showing portions of the male end portion 58 along with groove 86 in phantom line; wherein Figure 14 shows embodiment 48 and Figure 15 shows embodiment 50. Shown therein is the inside 100 of the female coupling 56 along with the double cam levers 48, 50 on one side only of the female end portion 56 showing the bosses 78, 80 on the female coupling 56. Note that the openings 88 are sized and shaped to accommodate movement of the cam lobes of the double levers of the present invention; also, it should be clear that the lobes and levers could have many shapes and thicknesses other than those which are illustrated so long as they are effectively sized and shaped to accomplish the teachings of the present invention all of which would be understood by one skilled in the art. The bosses 78, 80 are attached onto the outside of the female coupling 56 in the conventional manner. In Figure 15, the axles 74, 90 lie in the same horizontal plane and therefore only the front axle 90 in aperture 92 is visible in this drawing. Previously disclosed elements may also be shown as were discussed relative to the respective embodiments 48, 50 of Figures 2-3.

Turning to Figures 16-17, an enlarged view of the double cam levers/ears of the two embodiments 48, 50 are shown illustrating the features of the two embodiments as previously disclosed relative to the respective embodiments 48, 50 of Figures 2-3. Figure 16 shows embodiment 48 and Figure 17 shows embodiment 50. In Figures 16,17, cam lobe 68 of outer cam ear 62 is larger, i.e., having a larger radius on its rear peripheral portion 112 which is visible when closed, than cam lobe 72 of inner cam ear 64 as shown at 112. Regarding Figures 16-17, because cam portion 68 has a larger radius on its rear portion 112 than cam portion 72, as measured at its horizontal plane through its central axle, it therefore effectively and substantially fills or engages the complimentarily sized groove 86 causing a complete seal between the gasket 98 and the male end portion 58 as shown in Figure 8 and 11; however, after the outer cam lever/ear 68 has been opened and when the smaller cam lobe portion 72 protrudes into groove 86 it doesn't completely fill the groove so the space 106 is formed as shown in Figures 9 and 12 between the end 60 of the male end 58 and the gasket 98 of the female end portion 56. Figures 10 and 13 show the female 56 and male 58 ends completely separated with cam lever/ears 62, 64 in the open position.

Turning to Figure 18, therein is shown an alternative embodiment of the present invention showing the inner cam lever 64 being larger on its rear peripheral portion 112 than the outer cam lever 62. Previously disclosed elements are also shown. Figure 25 shows a top view of the alternative embodiment of Figure 18 showing the inner cam lever 64 being larger than the outer cam lever 62.

Turning to Figure 19, therein is shown a top view of the inner cam lever 64 of the first embodiment of the present invention showing previously disclosed elements. Space/cutout 110 between the prongs of the forked ends of the cam lobe portions 72 is also shown. It can be seen that the cam lobe portions 72 form the prongs of the forked portion.

With reference to Figures 1-19, the cam members 62, 64 pivot substantially parallel to the centerline of the cam lock fitting/coupling 54 with the axles 74, 90 being substantially perpendicular to the centerline, and, the cam members are disposed on the bosses 78, 80 so that the cam lobes 68, 72 and the axles will be properly operationally aligned with the groove 86 as required by each embodiment 48, 50 all of which would be understood by one skilled in the art. The axles 74, 90 may be hollow pins, roll pins or the like. Cam members 62, 64 are disposed substantially 180 degrees apart on opposite sides of the female conduit 56 and therefore all mechanical forces related to associated stresses or torque resulting from operation of the cam members are evenly distributed around the cam lock fitting 54. This will prevent warping of the elements of the present invention 10 over time.

Turning to Figures 20-24, therein is shown an embodiment of the present invention 10 which provides an automatic lever latching mechanism disposed on levers 62, 64, generally indicated by reference numeral 113, so that when the levers 62, 64 are moved from an open position into a closed position they become automatically latched in the closed position so that before an operator opens the levers he will have to use a pull ring 114 or the like in order to open the first and second levers 62, 64, or as shown in Figure 22, he would use the pull ring 114 to open only one lever which would have the lever latching mechanism 113 thereon. In either embodiment, the operator would have to operate a lever latching mechanism 113 before he could open the levers 62, 64 thereby preventing the cam levers from being inadvertently opened. Inner lever 64 is shorter than outer lever 62 for convenience and ease of operation by the operator/user. Previously disclosed elements are also shown as were discussed relative to the respective embodiments 48, 50 of Figures 2-3.

Continuing with Figures 20-24, therein is shown the present invention 10 having a pair of double cam levers 62, 64 mounted on opposite sides of the female end portion 56 wherein each pair has an outer cam lever 62 and an inner cam lever 64. Outer cam lever 62 has a lever portion 66 and an eccentric cam lobe portion 68, and, inner cam lever 64 also has a lever portion 70 and first and second eccentric cam lobe portions 72 wherein the first and second cam lobe portions are fork shaped and spaced apart a distance thereby creating a cutout 110 or space sufficient to allow the cam lobe portion 68 to fit therein between which causes the inner and outer cam levers 62, 64 to be disposed symmetrically about the female end portion 56 which assures smooth operation throughout the life span of a cam lock fitting 54 made according to the teachings of the present invention 10. Figures 20, 21, 23 and 24 discloses embodiment 48 which uses a single axle 74 whereas Figure 22 discloses embodiment 50 which uses double axles 74 and 90.

Turning to Figure 20, therein is shown the present invention 10 exploded away from the female end portion 56 and incorporates embodiment 48. Shown therein is the inside 100 of the female coupling 56 along with the double cam levers 48 on opposite sides of the female end portion 56 showing the bosses 78, 80 on the female coupling 56. Note that the openings 88 are sized and shaped to accommodate movement of the cam lobes of the present invention. The bosses 78, 80 are attached onto the outside of the female coupling 56 in the conventional manner. Male end portion 58 is also partially shown in phantom line. Previously disclosed elements are also shown as were discussed relative to the respective embodiments 48, 50 of Figures 2-3.

Also shown in Figure 20, is a pull ring 114 attached to an end 116 of a pin 118 wherein the pull ring passes through a slot or aperture 120 on an end of the pin which pin is slidably disposed in a housing 122 attached onto a side of lever 62, 64 so that each lever 62, 64 has a housing 122 and a pin 118 mounted thereon. Pull ring 114 may be a multi-turn wire ring being useful for manipulating levers 62, 64. Note that the pin 118 is mounted inside the housing 122 so as to be slidably disposed in the housing so that the pin slides along the longitudinal axis of the levers 62, 64. The pin 118 also has a second end or tip 124 having an inclined surface 126 thereon. The pin 118 extends along and is slidable along an axis of a respective lever 62, 64 so that when the levers 62, 64 are in a closed position the tip 124 of pin 118 latches underneath the rear portion of upper and lower corresponding retaining protrusions 128, 130 disposed on a rear portion of boss 78 as best seen in Figure 23.

Continuing with Figures 20-24, when the respective pull rings 114 of levers 62, 64 are pulled rearwardly toward end 84 of female conduit 56 in the direction along the axis of the pin 118, the pin 118 is moved in a bore within the housing 122 against the biasing member, being spring 132, as would be understood by one skilled in the art. In operation, when the levers 62, 64 are pivoted from the open position to the locking position the inclined surface 126 of the tip of the pin 124 of each pin 118 eventually abuts against the rear upper surface of retaining protrusion 128, 130 of the respective retaining protrusions so that the tip 124 of the pin moves downwardly across the surface of the respective retaining protrusions 128, 130 due to further pivoting movement of the corresponding lever 62, 64 so that the tip 124 of pin 118 becomes eventually positioned underneath the respective retaining protrusions 128, 130 as the pin tip 124 is forced to be extended from the housing 122 due to the action of the internal spring 132 shown on each lever 62, 64 as best seen in Figure 23. In operation, when the operator desires to disengage or to open the levers 62, 64 and move them from a closed position to an open position the pull rings 114 are pulled toward the rear to retract the respective tips 124 of pins 118 in levers 62, 64 back into the housing 122 against the biasing action of the springs 132 so that the tips of pin 124 become disengaged from underneath the rear of the respective retraining protrusions 128, 130 so that the levers 62, 64 can then be pivoted upwardly to an unlocked position so that the couplings 56, 58 of the present invention 10 can be disengaged as best seen in Figure 24. In this manner, the male coupling 58 and female coupling 56 can become separated or disconnected, all of which would be understood by one skilled in the art.

Turning to Figure 21, therein is shown the embodiment 48 which has been previously disclosed in relation to Figure 5 of the present invention 10 shown in combination with the previously disclosed lever latching mechanism 113.

Turing to Figure 22, therein is shown the embodiment 50 which has been previously disclosed in relation to Figure 7 of the present invention 10 shown in combination with the previously disclosed lever latching mechanism 113.

Turning to Figures 22-24, therein are shown partially cut-away side views of the present invention 10 showing pull rings 114 disposed on respective levers 62, 64 being attached through an aperture 120 in the end of respective pins 118 also showing the housing 122 along with the biasing spring 132, or the like, wherein the tips 124 of the pin are shown along with the inclined surface 126 and respective retaining protrusions 128, 130 disposed on boss 78. Figure 23 shows the levers 62, 64 in a closed position similar to Figure 8, and, Figure 24 shows the levers 62, 64 in an open position similar to Figure 10 wherein the pull rings 114 of the levers 62, 64 have been operated and moved by a finger 134 of an operator/user so that the tips of the pin 124 are no longer captured underneath the corresponding retaining protrusions 128, 130 of the bosses 78. Inner lever 64 is shorter than outer lever 62 for convenience and ease of operation by the operator/user. Levers 62, 64 are configured so that the tip 124 of lever 64 mates with the retaining protrusion 130 and the tip 124 of lever 62 mates with retaining protrusion 128. Direction arrows are shown in certain figures to indicate movement of the elements.

Turning to Figure 25, therein is shown a top view of the alternative embodiment showing the inner cam lever 64 being larger than the outer cam lever 62 as was previously disclosed with respect to Figure 18. It can be seen that inner arm 64 is configured, sized and shaped so that it can be moved from the closed position to the open position without touching or interference from the outer arm 62. This is accomplished by providing a space 136 between inner arm 64 and outer arm 62 which allows inner arm 64 to substantially surround outer arm 62 so that the inner arm can be operated without moving the outer arm. It can be seen that the longitudinal central axis of the outer and inner cam levers 62, 64 are co-aligned so that the axis of the outer lever is directly above the axis of the inner lever.

With reference to Figures 1-25, the cam lock fitting 54 comprises a) a male conduit 58 having an end 60 thereon and an external peripheral groove 86 adjacent the end, b) a female conduit 56 for receiving the male conduit and having a pair of opposed side openings 88 opposite the external peripheral groove, c) sealing at 98 between the end of the male conduit and the female conduit, d) a first and second pair of cam members, each pair having first (outer) 62 and second (inner) 64 cam members so that there are a total of four cam members, a pair, i.e., two, of the cam members being pivotally disposed on opposite sides of the female conduit, each cam member having a lever portion 66, 70 lying adjacent the female conduit and a cam portion 68, 72 with a larger or more effectively sized or shaped cam portion on the first (outer) cam member 62, wherein the cam portions pass through the side openings and engage the external peripheral groove when the lever portion lies adjacent the female conduit in a first, closed position (see Figures 8 and 11), each lever portion being outwardly moveable away from the female conduit to a second, open position to disengage the cam portions from the external peripheral groove (see Figures 10 and 13), e) the male and female conduits being connected thereby preventing leakage thereinbetween when each of the lever portions are in the first position (see Figures 8 and 11); and, f) the male and female conduits being slightly separated, i.e., are loose fit, thereby allowing leakage thereinbetween when the lever portions of the first cam members are in the second position and the lever portions of the second cam members are in the first position (see Figures 9 and 12), wherein if leakage is observed by an operator the lever portions of the first cam members are moved back to the first position to permit the male and female conduits to be reconnected. Further,

the cam portions of the second cam members are forked (see Figure 19), the forks having a space 110 thereinbetween, wherein the cam portions of the first cam members are pivotally disposed in a respective space wherein the first and second cam members pivot on a first axle 74, or, wherein the first cam members pivot on a first axle 74 and the second cam members pivot on a second axle 90. In an alternative embodiment, the inner cam lever 64 is larger than the outer cam lever 62. The cam lock fitting also has a latching mechanism 113 having retaining protrusions 128, 130 mounted adjacent each of the side openings and a pin housing122 attached to each lever portion of each cam member, a spring 132 loaded pin 118 within each pin housing which urges a distal end 124 of the pin into engagement with one of the retaining protrusions to prevent each of the lever portions from being moved from the closed position to the open position, and a pull member 114, or the like, attached to a proximal end 116 of the pins to allow an operator to withdraw the pin from engagement with a retaining protrusion allowing each lever portion to be moved from the closed position to the open position.

## Claims

1. A safety cam lock fitting (54), comprising:
a) a male and a female conduit (58, 56), said male and female conduits (58, 56) adapted for being connected to each other, said male conduit (58) having an end thereon and an external peripheral groove (86) adjacent said end, said female conduit (56) having an end thereon and an internal seal (98) disposed therein adjacent said end, wherein said end of said male conduit (58) contacts said seal (98) of said female (56) conduit thereby preventing leakage when said male and female conduits (58, 56) are connected to each other;
b) a first and a second pair of cam members (62, 64), each pair having first and second cam members (62, 64), said first and second pair of cam members (62, 64) being pivotally disposed on opposite sides of said female conduit (56), each said cam member (62, 64) having a lever portion (66, 70) and a cam portion (68, 72), wherein each said cam portion (68, 72) is adapted to pivot through an opening (88) in a wall of said female conduit (56) and into said external peripheral groove (86) so as to removably join said male conduit (58) to said female conduit (56), wherein each said cam member (62, 64) has a closed position when said male and female conduits (58, 56) are connected to each other and an open position when said male and female conduits (58, 56) are disconnected from each other;
c) wherein said cam portions (72) of said second cam members (64) have a forked portion, said forked portion having a first and second prong portion, said first and second prong portion having a space thereinbetween, wherein said cam portions (68) of said first cam members (62) are pivotally disposed in a respective space of said spaces; and,
d) wherein said male and female conduits (58, 56) have a partially open position in which said male and female conduits (58, 56) are slightly separated from each other thereby allowing leakage between said male and female conduits (58, 56) when each said first cam member (62) is in said open position and each said second cam member (64) is in said closed position, wherein if said leakage is observed by an operator each said first cam member (62) is pivotable back to said closed position to permit the male and female conduits (58, 56) to be reconnected to each other.

2. The safety cam lock fitting (54) of Claim 1,
wherein said first and second cam members (62, 64) pivot on a first axle (74), or
wherein said first cam members (62) pivot on a first axle (74) and said second cam members (64) pivot on a second axle (90).

3. The safety cam lock fitting (54) of Claim 1,
wherein said cam portion (68) of each said first cam member (62) effectively conforms to said external peripheral groove (86) more than said cam portion (72) of each said second cam member (64) to permit the male and female conduits (58, 56) to be connected to each other when each said first cam member (62) is in said closed position, or
wherein said cam portion (68) of each said first cam member (62) is larger than said cam portion (72) of each said second cam member (64) to permit the male and female conduits (58, 56) to be connected to each other when each said first cam member (62) is in said closed position.

4. The safety cam lock fitting (54) of Claim 1, further comprising a latch being disposed on said lever portion (66, 70) of said cam members (62, 64), wherein when said lever portion (66, 70) is moved from said open position into said closed position said lever portion (66, 70) is latched in said closed position, wherein said latch is unlatchable to allow said lever portion (66, 70) to be moved from said closed position to said open position.

5. The safety cam lock fitting (54) of Claim 4, wherein each said latch comprises a retaining protrusion (128, 130) mounted on an outside of said female conduit (56), a pin housing (122) attached to said lever portion (66, 70) of said cam member (62, 64), a pin (118) disposed within each pin housing (122), each said pin (118) being biased for urging a distal end of said pin (118) into engagement with said retaining protrusion (128, 130) to prevent each of said lever portions (66, 70) from being moved from said closed position to said open position, and a pull member (114) attached to a proximal end of said pin (118) to allow withdrawal of said pin (118) from engagement with said retaining protrusion (128, 130) allowing each said lever portion (66, 70) to be moved from said closed position to said open position.

6. The safety cam lock fitting (54) of Claim 1, wherein said cam portion (72) of each said second cam member (64) is larger than said cam portion (68) of each said first cam member (62), wherein said male conduit (58) has a partially open position in which said male and female conduits (58, 56) are slightly separated from each other thereby allowing leakage between said male and female conduits (58, 56) when each said second cam member (64) is in said open position and each said first cam member (62) is in said closed position, wherein if said leakage is observed by an operator each said second cam member (64) is pivoted back to said closed position to permit the male and female conduits (58, 56) to be reconnected to each other.

7. The safety cam lock fitting (54) of claim 1, wherein:
the female conduit (56) has a pair of opposed side openings disposed opposite said external peripheral groove (86) when said male and female conduits (58, 56) are connected to each other;
said cam portions (68, 72) pass through said side openings and engage said external peripheral groove (86) when said lever portions (66, 70) lie adjacent said female conduit (56) in a closed position, each lever portion (66, 70) being outwardly moveable away from said female conduit (56) to an open position to disengage said cam portions (68, 72) from said external peripheral groove (86);
said male and female conduits (58, 56) are connected thereby preventing leakage thereinbetween when each said lever portion (66, 70) is in said closed position; and
the safety cam lock fitting (54) comprises a latching mechanism (113) disposed on said lever portion (66, 70) of each said cam member (62, 64) so that when each said lever portion (66, 70) is moved from said open position into said closed position said lever portion (66, 70) is automatically latched in said closed position, and a separate member (114) to unlatch said latching mechanism (113) thereby allowing said lever portion (66, 70) to be moved from said closed position to said open position.

8. A method for a safety cam lock fitting (54), comprising the steps of:
a) providing a male and a female conduit (58, 56) adapted for connection to each other, the male conduit (58) having an end thereon and an external peripheral groove (86) adjacent the end, the female conduit (56) having an end thereon and an internal seal (98) disposed therein adjacent the end, wherein the end of the male conduit (58) contacts the seal (98) of the female conduit (56) thereby preventing leakage when the male and female conduits (58, 56) are connected to each other;
b) providing a first and a second pair of cam members (62, 64), each pair having first and second cam members (62, 64), disposing said first and second pair of the cam members (62, 64) on opposite sides of the female conduit (56), each cam member (62, 64) having a lever portion (66, 70) and a cam portion (68, 72), wherein each cam portion (68, 72) is adapted to pivot through an opening in a wall of the female conduit (56) and into the external peripheral groove (86) so as to removably join the male conduit (58) to the female conduit (56), wherein each cam member (62, 64) has a closed position when the male and female conduits (58, 56) are connected to each other and an open position when the male and female conduits (58, 56) are disconnected from each other;
c) providing a forked portion on the cam portions (72) of the second cam members (64), the forked portion having a first and second prong portion, the first and second prong portion having a space thereinbetween, pivotally disposing the cam portions (68) of the first cam members (62) in a respective space of said spaces; and,
d) wherein the male and female conduits (58, 56) have a partially open position in which the male and female conduits (58, 56) are slightly separated from each other thereby allowing leakage between the male and female conduits (58, 56) when each first cam member (62) is in the open position and each second cam member (64) is in the closed position, wherein if leakage is observed by an operator each first cam member (62) is pivoted back to the closed position to permit the male and female conduits (58, 56) to be reconnected to each other.

9. The method of Claim 8,
wherein the first and second cam members (62, 64) pivot on a first axle (74), or
wherein the first cam members (62) pivot on a first axle (74) and the second cam members (64) pivot on a second axle (90).

10. The method of Claim 8,
wherein the cam portion (68) of each first cam member (62) effectively conforms to the external peripheral groove (86) more than the cam portion (72) of each second cam member (64) so that the male and female conduits (58, 56) are connected to each other when each first cam member (62) is in the closed position, or
wherein the cam portion (68) of each first cam member (62) is larger than the cam portion (72) of each second cam member (64) so that the male and female conduits (58, 56) are connected to each other when each first cam member (62) is in the closed position, or
wherein the cam portion (72) of each second cam member (64) is larger than the cam portion (68) of each first cam member (62), wherein the male conduit (58) has a partially open position in which the male and female conduits (58, 56) are slightly separated from each other thereby allowing leakage between the male and female conduits (58, 56) when each second cam member (64) is in the open position and each first cam member (62) is in the closed position, wherein if leakage is observed by an operator each second cam member (64) is pivoted back to the closed position to permit the male and female conduits (58, 56) to be reconnected to each other.

11. The method of Claim 8, disposing a latch on the lever portion (66, 70) of the cam members (62, 64) so that when the lever portion (66, 70) is moved from the open position into the closed position the lever portion (66, 70) is latched in the closed position, wherein the latch is unlatchable to allow the lever portion (66, 70) to be moved from the closed position to the open position.

12. The method of Claim 11, further comprising the step of mounting a retaining protrusion (128, 130) on an outside of the female conduit (56), providing a pin housing (122) attached to the lever portion (66, 70) of the cam member (62, 64), disposing a pin (118) within each pin housing (122), biasing the pin (118) for urging a distal end of the pin (118) into engagement with the retaining protrusion (128, 130) to prevent each of the lever portions (66, 70) from being moved from the closed position to the open position, and providing a pull member (114) on a proximal end of the pin (118) to allow withdrawal of the pin (118) from engagement with the retaining protrusion (128, 130) allowing each lever portion (66, 70) to be moved from the closed position to the open position.

13. The method of claim 8, wherein:
the female conduit (56) has a pair of opposed side openings disposed opposite the external peripheral groove (86) when the male and female conduits (58, 56) are connected to each other;
the cam portions (68, 72) pass through the side openings and engage the external peripheral groove (86) when the lever portion (66, 70) lies adjacent the female conduit (56) in a closed position, each lever portion (66, 70) being outwardly moveable away from the female conduit (56) to an open position to disengage the cam portions (68, 72) from the external peripheral groove (86);
wherein the male and female conduits (58, 56) are connected thereby preventing leakage thereinbetween when the lever portions (66, 70) are in the closed position; and
the method comprises providing a latching mechanism (113) on the lever portion (66, 70) of each cam member (62, 64) so that when each lever portion (66, 70) is moved from an open position into the closed position the lever portion (66, 70) is automatically latched in the closed position, and providing a pull member (114) for unlatching the latching mechanism (113) thereby allowing the lever portion (66, 70) to be moved from the closed position to the open position.

## Patentansprüche

1. Ein Sicherheitsnockenverriegelungsbeschlag (54), aufweisend:
a) eine Vater- und eine Mutterleitung (58, 56), wobei die Vater- und die Mutterleitung (58, 56) dafür geeignet sind, miteinander verbunden zu werden, wobei die Vaterleitung (58) ein Ende daran und eine äußere Umfangsnut (86) angrenzend an das Ende aufweist, wobei die Mutterleitung (56) ein Ende und eine innere Dichtung (98) aufweist, die darin angrenzend an das Ende angeordnet ist, wobei das Ende der Vaterleitung (58) die Dichtung (98) der Mutterleitung (56) berührt, wodurch eine Leckage verhindert wird, wenn die Vater- und Mutterleitungen (58, 56) miteinander verbunden sind;
b) ein erstes und ein zweites Paar von Nockenelementen (62, 64), wobei jedes Paar ein erstes und ein zweites Nockenelement (62, 64) aufweist, wobei das erste und das zweite Paar von Nockenelementen (62, 64) schwenkbar auf gegenüberliegenden Seiten der Mutterleitung (56) angeordnet sind, wobei jedes Nockenelement (62, 64) einen Hebelabschnitt (66, 70) und einen Nockenabschnitt (68, 72) aufweist, wobei jeder Nockenabschnitt (68, 72) dafür geeignet ist, durch eine Öffnung (88) in einer Wand der Mutterleitung (56) und in die äußere Umfangsnut (86) zu schwenken, um die Vaterleitung (58) mit der Mutterleitung (56) lösbar zu verbinden, wobei jedes Nockenelement (62, 64) eine geschlossene Position, wenn die Vater- und Mutterleitungen (58, 56) miteinander verbunden sind, und eine offene Position hat, wenn die Vater- und Mutterleitungen (58, 56) voneinander getrennt sind;
c) wobei die Nockenabschnitte (72) der zweiten Nockenelemente (64) einen gabelförmigen Abschnitt aufweisen, wobei der gabelförmige Abschnitt einen ersten und einen zweiten Zinkenabschnitt aufweist, wobei der erste und der zweite Zinkenabschnitt einen Raum dazwischen aufweisen, wobei die Nockenabschnitte (68) der ersten Nockenelemente (62) schwenkbar in einem jeweiligen Raum der Räume angeordnet sind; und,
d) wobei die Vater- und Mutterleitungen (58, 56) eine teilweise offene Position haben, in der die Vater- und Mutterleitungen (58, 56) geringfügig voneinander getrennt sind, wodurch eine Leckage zwischen der Vater- und Mutterleitungen (58, 56) ermöglicht wird, wenn sich jedes erste Nockenelement (62) in der offenen Position und jedes zweite Nockenelement (64) in der geschlossenen Position befindet, wobei, wenn die Leckage von einem Bediener beobachtet wird, jedes erste Nockenelement (62) in die geschlossene Position zurück geschwenkt werden kann, damit die Vater- und Mutterleitungen (58, 56) wieder miteinander verbunden werden können.

2. Der Sicherheitsnockenverriegelungsbeschlag (54) nach Anspruch 1,
wobei die ersten und zweiten Nockenelemente (62, 64) um eine erste Achse (74) schwenken, oder
wobei die ersten Nockenelemente (62) um eine erste Achse (74) und die zweiten Nockenelemente (64) um eine zweite Achse (90) schwenken.

3. Der Sicherheitsnockenverriegelungsbeschlag (54) nach Anspruch 1,
wobei der Nockenabschnitt (68) jedes ersten Nockenelements (62) sich der äußeren Umfangsnut (86) wirksamer anpasst als der Nockenabschnitt (72) jedes zweiten Nockenelements (64), um zu ermöglichen, dass die Vater- und Mutterleitungen (58, 56) miteinander verbunden werden, wenn sich jedes erste Nockenelement (62) in der geschlossenen Position befindet, oder
wobei der Nockenabschnitt (68) jedes ersten Nockenelements (62) größer ist als der Nockenabschnitt (72) jedes zweiten Nockenelements (64), um zu ermöglichen, dass die Vater- und Mutterleitungen (58, 56) miteinander verbunden werden, wenn sich jedes erste Nockenelement (62) in der geschlossenen Position befindet.

4. Der Sicherheitsnockenverriegelungsbeschlag (54) nach Anspruch 1, der ferner eine Verriegelung aufweist, die an dem Hebelabschnitt (66, 70) der Nockenelemente (62, 64) angeordnet ist, wobei der Hebelabschnitt (66, 70) in der geschlossenen Position verriegelt wird, wenn der Hebelabschnitt (66, 70) von der offenen Position in die geschlossene Position bewegt wird, wobei die Verriegelung entriegelt werden kann, damit der Hebelabschnitt (66, 70) von der geschlossenen Position in die offene Position bewegt werden kann.

5. Der Sicherheitsnockenverriegelungsbeschlag (54) nach Anspruch 4, wobei jede Verriegelung aufweist: einen Haltevorsprung (128, 130), der an einer Außenseite der Mutterleitung (56) angebracht ist, ein Stiftgehäuse (122), das an dem Hebelabschnitt (66, 70) des Nockenelements (62, 64) angebracht ist, einen Stift (118), der innerhalb jedes Stiftgehäuses (122) angeordnet ist, wobei jeder Stift (118) zum Drücken eines distalen Endes des Stifts (118) in Eingriff mit dem Haltevorsprung (128, 130) vorgespannt ist, um zu verhindern, dass jeder der Hebelabschnitte (66, 70) von der geschlossenen Position in die offene Position bewegt wird, und ein Zugelement (114), das an einem proximalen Ende des Stifts (118) befestigt ist, um das Zurückziehen des Stifts (118) aus dem Eingriff mit dem Haltevorsprung (128, 130) zu ermöglichen, wodurch jeder Hebelabschnitt (66, 70) von der geschlossenen Position in die offene Position bewegt werden kann.

6. Der Sicherheitsnockenverriegelungsbeschlag (54) nach Anspruch 1, wobei der Nockenabschnitt (72) jedes zweiten Nockenelements (64) größer ist als der Nockenabschnitt (68) jedes ersten Nockenelements (62), wobei die Vaterleitung (58) eine teilweise offene Position aufweist, in der die Vater- und Mutterleitungen (58, 56) geringfügig voneinander getrennt sind, wodurch eine Leckage zwischen der Vater- und Mutterleitungen (58, 56) ermöglicht ist, wenn sich jedes zweite Nockenelement (64) in der offenen Position und jedes erste Nockenelement (62) in der geschlossenen Position befindet, wobei, wenn die Leckage von einem Bediener beobachtet wird, jedes zweite Nockenelement (64) in die geschlossene Position zurück geschwenkt wird, um zu ermöglichen, dass die Vater- und Mutterleitungen (58, 56) wieder miteinander verbunden werden.

7. Der Sicherheitsnockenverriegelungsbeschlag (54) nach Anspruch 1, wobei:
die Mutterleitung (56) ein Paar gegenüberliegender Seitenöffnungen aufweist, die gegenüber der äußeren Umfangsnut (86) angeordnet sind, wenn die Vater- und Mutterleitungen (58, 56) miteinander verbunden sind;
die Nockenabschnitte (68, 72) durch die Seitenöffnungen hindurchgehen und in die äußere Umfangsnut (86) eingreifen, wenn die Hebelabschnitte (66, 70) in einer geschlossenen Position angrenzend an die Mutterleitung (56) liegen, wobei jeder Hebelabschnitt (66, 70) nach außen von der Mutterleitung (56) weg in eine offene Position bewegbar ist, um die Nockenabschnitte (68, 72) von der äußeren Umfangsnut (86) zu lösen;
die Vater- und Mutterleitungen (58, 56) miteinander verbunden sind, wodurch eine Leckage zwischen ihnen verhindert wird, wenn sich jeder Hebelabschnitt (66, 70) in der geschlossenen Position befindet; und
der Sicherheitsnockenverriegelungsbeschlag (54) aufweist: einen Verriegelungsmechanismus (113), der an dem Hebelabschnitt (66, 70) jedes Nockenelements (62, 64) angeordnet ist, so dass der Hebelabschnitt (66, 70) automatisch in der geschlossenen Position verriegelt wird, wenn jeder Hebelabschnitt (66, 70) von der offenen Position in die geschlossene Position bewegt wird, und ein separates Element (114) zum Entriegeln des Verriegelungsmechanismus (113), wodurch ermöglicht wird, dass der Hebelabschnitt (66, 70) von der geschlossenen Position in die offene Position bewegt wird.

8. Ein Verfahren für einen Sicherheitsnockenverriegelungsbeschlag (54), das die Schritte aufweist:
a) Bereitstellen einer Vater- und einer Mutterleitung (58, 56), die zur Verbindung miteinander geeignet sind, wobei die Vaterleitung (58) ein Ende daran und eine äußere Umfangsnut (86) angrenzend an das Ende aufweist, wobei die Mutterleitung (56) ein Ende daran und eine innere Dichtung (98) aufweist, die darin angrenzend an das Ende angeordnet ist, wobei das Ende der Vaterleitung (58) die Dichtung (98) der Mutterleitung (56) berührt, wodurch eine Leckage verhindert wird, wenn die Vater- und Mutterleitungen (58, 56) miteinander verbunden sind;
b) Bereitstellen eines ersten und eines zweiten Paares von Nockenelementen (62, 64), wobei jedes Paar ein erstes und ein zweites Nockenelement (62, 64) aufweist, Anordnen des ersten und des zweiten Paares der Nockenelemente (62, 64) auf gegenüberliegenden Seiten der Mutterleitung (56), wobei jedes Nockenelement (62, 64) einen Hebelabschnitt (66, 70) und einen Nockenabschnitt (68, 72) aufweist, wobei jeder Nockenabschnitt (68, 72) dafür geeignet ist, durch eine Öffnung in einer Wand der Mutterleitung (56) und in die äußere Umfangsnut (86) zu schwenken, um die Vaterleitung (58) mit der Mutterleitung (56) lösbar zu verbinden, wobei jedes Nockenelement (62, 64) eine geschlossene Position, wenn die Vater- und Mutterleitungen (58, 56) miteinander verbunden sind, und eine offene Position hat, wenn die Vater- und Mutterleitungen (58, 56) voneinander getrennt sind;
c) Bereitstellen eines gabelförmigen Abschnitts an den Nockenabschnitten (72) der zweiten Nockenelemente (64), wobei der gabelförmige Abschnitt einen ersten und einen zweiten Zinkenabschnitt aufweist, wobei der erste und der zweite Zinkenabschnitt einen Raum dazwischen aufweisen, schwenkbares Anordnen der Nockenabschnitte (68) der ersten Nockenelemente (62) in einem jeweiligen Raum der Räume; und,
d) wobei die Vater- und Mutterleitungen (58, 56) eine teilweise offene Position haben, in der die Vater- und Mutterleitungen (58, 56) geringfügig voneinander getrennt sind, wodurch eine Leckage zwischen der Vater- und Mutterleitungen (58, 56) ermöglicht wird, wenn sich jedes erste Nockenelement (62) in der offenen Position und jedes zweite Nockenelement (64) in der geschlossenen Position befindet, wobei, wenn die Leckage von einem Bediener beobachtet wird, jedes erste Nockenelement (62) in die geschlossene Position zurück geschwenkt werden kann, damit die Vater- und Mutterleitungen (58, 56) wieder miteinander verbunden werden können.

9. Das Verfahren nach Anspruch 8,
wobei die ersten und zweiten Nockenelemente (62, 64) um eine erste Achse (74) schwenken, oder
wobei die ersten Nockenelemente (62) um eine erste Achse (74) und die zweiten Nockenelemente (64) um eine zweite Achse (90) schwenken.

10. Das Verfahren nach Anspruch 8,
wobei der Nockenabschnitt (68) jedes ersten Nockenelements (62) sich der äußeren Umfangsnut (86) wirksamer anpasst als der Nockenabschnitt (72) jedes zweiten Nockenelements (64), um zu ermöglichen, dass die Vater- und Mutterleitungen (58, 56) miteinander verbunden werden, wenn sich jedes erste Nockenelement (62) in der geschlossenen Position befindet, oder
wobei der Nockenabschnitt (68) jedes ersten Nockenelements (62) größer ist als der Nockenabschnitt (72) jedes zweiten Nockenelements (64), um zu ermöglichen, dass die Vater- und Mutterleitungen (58, 56) miteinander verbunden werden, wenn sich jedes erste Nockenelement (62) in der geschlossenen Position befindet.
wobei der Nockenabschnitt (72) jedes zweiten Nockenelements (64) größer ist als der Nockenabschnitt (68) jedes ersten Nockenelements (62), wobei die Vaterleitung (58) eine teilweise offene Position aufweist, in der die Vater- und Mutterleitungen (58, 56) geringfügig voneinander getrennt sind, wodurch eine Leckage zwischen der Vater- und Mutterleitungen (58, 56) ermöglicht ist, wenn sich jedes zweite Nockenelement (64) in der offenen Position und jedes erste Nockenelement (62) in der geschlossenen Position befindet, wobei, wenn die Leckage von einem Bediener beobachtet wird, jedes zweite Nockenelement (64) in die geschlossene Position zurück geschwenkt wird, um zu ermöglichen, dass die Vater- und Mutterleitungen (58, 56) wieder miteinander verbunden werden.

11. Das Verfahren nach Anspruch 8, wobei eine Verriegelung an dem Hebelabschnitt (66, 70) der Nockenelemente (62, 64) angeordnet ist, so dass, wenn der Hebelabschnitt (66, 70) von der offenen Position in die geschlossene Position bewegt wird, der Hebelabschnitt (66, 70) in der geschlossenen Position verriegelt wird, wobei die Verriegelung entriegelt werden kann, damit der Hebelabschnitt (66, 70) von der geschlossenen Position in die offene Position bewegt werden kann.

12. Das Verfahren nach Anspruch 11, das ferner den Schritt von: Anbringen eines Haltevorsprungs (128, 130) an einer Außenseite der Mutterleitung (56), Bereitstellen eines Stiftgehäuses (122), das an dem Hebelabschnitt (66, 70) des Nockenelements (62, 64) befestigt ist, Anordnen eines Stifts (118) innerhalb jedes Stiftgehäuses (122), Vorspannen des Stifts (118) zum Drücken eines distalen Endes des Stifts (118) in Eingriff mit dem Haltevorsprung (128, 130), um zu verhindern, dass jeder der Hebelabschnitte (66, 70) von der geschlossenen Position in die offene Position bewegt wird, und Bereitstellen eines Zugelements (114) an einem proximalen Ende des Stifts (118), um das Zurückziehen des Stifts (118) aus dem Eingriff mit dem Haltevorsprung (128, 130) zu ermöglichen, wodurch jeder Hebelabschnitt (66, 70) von der geschlossenen Position in die offene Position bewegt werden kann.

13. Das Verfahren nach Anspruch 8, wobei:
die Mutterleitung (56) ein Paar gegenüberliegender Seitenöffnungen aufweist, die gegenüber der äußeren Umfangsnut (86) angeordnet sind, wenn die Vater- und Mutterleitungen (58, 56) miteinander verbunden sind;
die Nockenabschnitte (68, 72) durch die Seitenöffnungen hindurchgehen und in die äußere Umfangsnut (86) eingreifen, wenn der Hebelabschnitt (66, 70) in einer geschlossenen Position angrenzend an die Mutterleitung (56) liegt, wobei jeder Hebelabschnitt (66, 70) nach außen von der Mutterleitung (56) weg in eine offene Position bewegbar ist, um die Nockenabschnitte (68, 72) von der äußeren Umfangsnut (86) zu lösen;
wobei die Vater- und Mutterleitungen (58, 56) miteinander verbunden sind, wodurch eine Leckage zwischen ihnen verhindert wird, wenn sich die Hebelabschnitte (66, 70) in der geschlossenen Position befinden; und
das Verfahren aufweist: Bereitstellen eines Verriegelungsmechanismus (113) an dem Hebelabschnitt (66, 70) jedes Nockenelements (62, 64), so dass der Hebelabschnitt (66, 70) automatisch in der geschlossenen Position verriegelt wird, wenn jeder Hebelabschnitt (66, 70) von einer offenen Position in die geschlossene Position bewegt wird, und Bereitstellen eines Zugelements (114) zum Entriegeln des Verriegelungsmechanismus (113), wodurch der Hebelabschnitt (66, 70) von der geschlossenen Position in die offene Position bewegt werden kann.

## Revendications

1. Raccord de sécurité à verrou à came (54), comprenant :
a) un conduit mâle et un conduit femelle (58, 56), lesdits conduits mâle et femelle (58, 56) étant aptes à être reliés l'un à l'autre, ledit conduit mâle (58) comportant une extrémité sur celui-ci et une rainure périphérique externe (86) adjacente à ladite extrémité, ledit conduit femelle (56) comportant une extrémité sur celui-ci et un joint interne (98) disposé à l'intérieur de celui-ci adjacent à ladite extrémité, dans lequel ladite extrémité dudit conduit mâle (58) vient au contact dudit joint (98) dudit conduit femelle (56) en interdisant de ce fait toute fuite lorsque lesdits conduits mâle et femelle (58, 56) sont reliés l'un à l'autre ;
b) une première et une seconde paire d'éléments de came (62, 64), chaque paire comportant des premier et second éléments de came (62, 64), lesdites première et seconde paires d'éléments de came (62, 64) étant disposées en pivotant sur des côtés opposés dudit conduit femelle (56), chaque dit élément de came (62, 64) comportant une partie de levier (66, 70) et une partie de came (68, 72), dans lequel chaque dite partie de came (68, 72) est apte à pivoter à travers une ouverture (88) dans une paroi dudit conduit femelle (56) et dans ladite rainure périphérique externe (86) afin de raccorder de manière amovible ledit conduit mâle (58) audit conduit femelle (56), dans lequel chaque dit élément de came (62, 64) comporte une position fermée lorsque lesdits conduits mâle et femelle (58, 56) sont reliés l'un à l'autre et une position ouverte lorsque lesdits conduits mâle et femelle (58, 56) sont déconnectés l'un de l'autre ;
c) dans lequel lesdites parties de came (72) desdits seconds éléments de came (64) comportent une partie en forme de fourche, ladite partie en forme de fourche comportant des premier et second fourchons, lesdits premier et second fourchons comportant un espace entre eux, dans lequel lesdites parties de came (68) desdits premiers éléments de came (62) sont disposées en pivotant dans un espace respective parmi lesdits espaces ; et,
d) dans lequel lesdits conduits mâle et femelle (58, 56) comportent une position partiellement ouverte à laquelle lesdits conduits mâle et femelle (58, 56) sont légèrement séparés l'un de l'autre en permettant de ce fait une fuite entre lesdits conduits mâle et femelle (58, 56) lorsque chaque dit premier élément de came (62) est à ladite position ouverte et chaque dit second élément de came (64) est à ladite position fermée, dans lequel, si ladite fuite est observée par un opérateur, chaque dit premier élément de came (62) revient en pivotant à ladite position fermée pour permettre aux conduits mâle et femelle (58, 56) de se reconnecter l'un à l'autre.

2. Raccord de sécurité à verrou à came (54) selon la revendication 1,
dans lequel lesdits premier et second éléments de came (62, 64) pivotent sur un premier essieu (74), ou
dans lequel lesdits premiers éléments de came (62) pivotent sur un premier essieu (74) et lesdits seconds éléments de came (64) pivotent sur un second essieu (90).

3. Raccord de sécurité à verrou à came (54) selon la revendication 1,
dans lequel ladite partie de came (68) de chaque dit premier élément de came (62) épouse efficacement ladite rainure périphérique externe (86) plus que ladite partie de came (72) de chaque dit second élément de came (64) pour permettre aux conduits mâle et femelle (58, 56) d'être reliés l'un à l'autre lorsque chaque dit premier élément de came (62) est à ladite position fermée, ou
dans lequel ladite partie de came (68) de chaque dit premier élément de came (62) est plus grande que ladite partie de came (72) de chaque dit second élément de came (64) pour permettre aux conduits mâle et femelle (58, 56) d'être reliés l'un à l'autre lorsque chaque dit premier élément de came (62) est à ladite position fermée.

4. Raccord de sécurité à verrou à came (54) selon la revendication 1, comprenant en outre un loquet qui est disposé sur ladite partie de levier (66, 70) desdits éléments de came (62, 64), dans lequel, lorsque ladite partie de levier (66, 70) est déplacée de ladite position ouverte à ladite position fermée, ladite partie de levier (66, 70) est verrouillée à ladite position fermée, dans lequel ledit loquet ne peut pas être déverrouillé pour permettre à ladite partie de levier (66, 70) d'être déplacée depuis ladite position fermée à ladite position ouverte.

5. Raccord de sécurité à verrou à came (54) selon la revendication 4, dans lequel chaque dit loquet comprend une saillie de retenue (128, 130) montée sur un extérieur dudit conduit femelle (56), un logement de broche (122) raccordé à ladite partie de levier (66, 70) dudit élément de came (62, 64), une broche (118) disposée à l'intérieur de chaque logement de broche (122), chaque dite broche (118) étant sollicitée pour pousser une extrémité distale de ladite broche (118) à se mettre en prise avec ladite saillie de retenue (128, 130) pour interdire à chacune desdites parties de levier (66, 70) d'être déplacée depuis ladite position fermée à ladite position ouverte, et un élément de tirage (114) raccordé à une extrémité proximale de ladite broche (118) pour permettre de retirer ladite broche (118) d'une mise en prise avec ladite saillie de retenue (128, 130) en permettant à chaque dite partie de levier (66, 70) d'être déplacée depuis ladite position fermée à ladite position ouverte.

6. Raccord de sécurité à verrou à came (54) selon la revendication 1, dans lequel ladite partie de came (72) de chaque dit second élément de came (64) est plus grande que ladite partie de came (68) de chaque dit premier élément de came (62), dans lequel ledit conduit mâle (58) comporte une position partiellement ouverte à laquelle lesdits conduits mâle et femelle (58, 56) sont légèrement séparés l'un de l'autre en permettant de ce fait une fuite entre lesdits conduits mâle et femelle (58, 56) lorsque chaque dit second élément de came (64) est à ladite position ouverte et chaque dit premier élément de came (62) est à ladite position fermée, dans lequel, si ladite fuite est observée par un opérateur, chaque dit second élément de came (64) revient en pivotant à ladite position fermée pour permettre aux conduits mâle et femelle (58, 56) de se reconnecter l'un à l'autre.

7. Raccord de sécurité à verrou à came (54) selon la revendication 1, dans lequel :
le conduit femelle (56) comporte une paire d'ouvertures latérales opposées disposées à l'opposé de ladite rainure périphérique externe (86) lorsque lesdits conduits mâle et femelle (58, 56) sont reliés l'un à l'autre ;
lesdites parties de came (68, 72) passent à travers lesdites ouvertures latérales et se mettent en prise avec ladite rainure périphérique externe (86) lorsque lesdites parties de levier (66, 70) se trouvent adjacentes audit conduit femelle (56) à une position fermée, chaque partie de levier (66, 70) pouvant être déplacée vers l'extérieur en s'éloignant dudit conduit femelle (56) à une position ouverte pour mettre lesdites parties de came (68, 72) hors prise de ladite rainure périphérique externe (86) ;
lesdits conduits mâle et femelle (58, 56) sont reliés en interdisant de ce fait toute fuite entre eux lorsque chaque dite partie de levier (66, 70) est à ladite position fermée ; et
le raccord de sécurité à verrou à came (54) comprend un mécanisme de verrouillage (113) disposé sur ladite partie de levier (66, 70) de chaque dit élément de came (62, 64) de sorte que, lorsque chaque dite partie de levier (66, 70) est déplacée depuis ladite position ouverte à ladite position fermée, ladite partie de levier (66, 70) soit automatiquement verrouillée à ladite position fermée, et un élément distinct (114) pour déverrouiller ledit mécanisme de verrouillage (113) en permettant de ce fait à ladite partie de levier (66, 70) d'être déplacée depuis ladite position fermée à ladite position ouverte.

8. Procédé pour un raccord de sécurité à verrou à came (54), comprenant les étapes suivantes :
a) la fourniture d'un conduit mâle et d'un conduit femelle (58, 56) étant aptes à être reliés l'un à l'autre, le conduit mâle (58) comportant une extrémité sur celui-ci et une rainure périphérique externe (86) adjacente à l'extrémité, le conduit femelle (56) comportant une extrémité sur celui-ci et un joint interne (98) disposé à l'intérieur de celui-ci adjacent à l'extrémité, dans lequel l'extrémité du conduit mâle (58) vient au contact du joint (98) du conduit femelle (56) en interdisant de ce fait toute fuite lorsque les conduits mâle et femelle (58, 56) sont reliés l'un à l'autre ;
b) la fourniture d'une première paire et d'une seconde paire d'éléments de came (62, 64), chaque paire comportant des premier et second éléments de came (62, 64), en disposant lesdites première et seconde paires d'éléments de came (62, 64) sur des côtés opposés du conduit femelle (56), chaque élément de came (62, 64) comportant une partie de levier (66, 70) et une partie de came (68, 72), dans lequel chaque partie de came (68, 72) est apte à pivoter à travers une ouverture dans une paroi du conduit femelle (56) et dans la rainure périphérique externe (86) afin de raccorder de manière amovible le conduit mâle (58) au conduit femelle (56), dans lequel chaque élément de came (62, 64) comporte une position fermée lorsque les conduits mâle et femelle (58, 56) sont reliés l'un à l'autre et une position ouverte lorsque les conduits mâle et femelle (58, 56) sont déconnectés l'un de l'autre ;
c) la fourniture d'une partie en forme de fourche sur les parties de came (72) des seconds éléments de came (64), la partie en forme de fourche comportant des premier et second fourchons, les premier et second fourchons comportant un espace entre eux, en disposant en pivotant les parties de came (68) des premiers éléments de came (62) dans un espace respectif parmi lesdits espaces ; et,
d) dans lequel les conduits mâle et femelle (58, 56) comportent une position partiellement ouverte à laquelle les conduits mâle et femelle (58, 56) sont légèrement séparés l'un de l'autre en permettant de ce fait une fuite entre les conduits mâle et femelle (58, 56) lorsque chaque premier élément de came (62) est à la position ouverte et chaque second élément de came (64) est à la position fermée, dans lequel, si une fuite est observée par un opérateur, chaque premier élément de came (62) revient en pivotant à la position fermée pour permettre aux conduits mâle et femelle (58, 56) de se reconnecter l'un à l'autre.

9. Procédé selon la revendication 8,
dans lequel les premier et second éléments de came (62, 64) pivotent sur un premier essieu (74), ou
dans lequel les premiers éléments de came (62) pivotent sur un premier essieu (74) et les seconds éléments de came (64) pivotent sur un second essieu (90).

10. Procédé selon la revendication 8,
dans lequel la partie de came (68) de chaque premier élément de came (62) épouse efficacement la rainure périphérique externe (86) plus que la partie de came (72) de chaque second élément de came (64) de sorte que les conduits mâle et femelle (58, 56) soient reliés l'un à l'autre lorsque chaque premier élément de came (62) est à la position fermée, ou
dans lequel la partie de came (68) de chaque premier élément de came (62) est plus grande que la partie de came (72) de chaque second élément de came (64) de sorte que les conduits mâle et femelle (58, 56) soient reliés l'un à l'autre lorsque chaque premier élément de came (62) est à la position fermée, ou
dans lequel la partie de came (72) de chaque second élément de came (64) est plus grande que la partie de came (68) de chaque premier élément de came (62), dans lequel le conduit mâle (58) comporte une position partiellement ouverte à laquelle les conduits mâle et femelle (58, 56) sont légèrement séparés l'un de l'autre en permettant de ce fait une fuite entre les conduits mâle et femelle (58, 56) lorsque chaque second élément de came (64) est à la position ouverte et chaque premier élément de came (62) est à la position fermée, dans lequel, si une fuite est observée par un opérateur, chaque second élément de came (64) revient en pivotant à la position fermée pour permettre aux conduits mâle et femelle (58, 56) de se reconnecter l'un à l'autre.

11. Procédé selon la revendication 8, comprenant la disposition d'un loquet sur la partie de levier (66, 70) des éléments de came (62, 64) de sorte que, lorsque la partie de levier (66, 70) est déplacée depuis la position ouverte à la position fermée, la partie de levier (66, 70) soit verrouillée à la position fermée, dans lequel le loquet ne peut pas être déverrouillé pour permettre à la partie de levier (66, 70) d'être déplacée depuis la position fermée à la position ouverte.

12. Procédé selon la revendication 11, comprenant en outre l'étape du montage d'une saillie de retenue (128, 130) sur un extérieur du conduit femelle (56), la fourniture d'un logement de broche (122) raccordé à la partie de levier (66, 70) de l'élément de came (62, 64), la disposition d'une broche (118) à l'intérieur de chaque logement de broche (122), la sollicitation de la broche (118) pour pousser une extrémité distale de la broche (118) à se mettre en prise avec la saillie de retenue (128, 130) pour interdire à chacune des parties de levier (66, 70) d'être déplacée depuis la position fermée à la position ouverte, et la fourniture d'un élément de tirage (114) sur une extrémité proximale de la broche (118) pour permettre de retirer la broche (118) d'une mise en prise avec la saillie de retenue (128, 130) en permettant à chaque partie de levier (66, 70) d'être déplacée depuis la position fermée à la position ouverte.

13. Procédé selon la revendication 8, dans lequel :
le conduit femelle (56) comporte une paire d'ouvertures latérales opposées disposées à l'opposé de la rainure périphérique externe (86) lorsque les conduits mâle et femelle (58, 56) sont reliés l'un à l'autre ;
les parties de came (68, 72) passent à travers les ouvertures latérales et se mettent en prise avec la rainure périphérique externe (86) lorsque la partie de levier (66, 70) se trouve adjacente au conduit femelle (56) à une position fermée, chaque partie de levier (66, 70) pouvant être déplacée vers l'extérieur en s'éloignant du conduit femelle (56) jusqu'à une position ouverte pour mettre les parties de came (68, 72) hors prise de la rainure périphérique externe (86) ;
dans lequel les conduits mâle et femelle (58, 56) sont reliés en interdisant de ce fait toute fuite entre eux lorsque les parties de levier (66, 70) sont à la position fermée ; et
le procédé comprend la fourniture d'un mécanisme de verrouillage (113) sur la partie de levier (66, 70) de chaque élément de came (62, 64) de sorte que, lorsque chaque partie de levier (66, 70) est déplacée depuis une position ouverte à la position fermée, la partie de levier (66, 70) soit automatiquement verrouillée à la position fermée, et la fourniture d'un élément de tirage (114) pour déverrouiller le mécanisme de verrouillage (113) en permettant de ce fait à la partie de levier (66, 70) d'être déplacée depuis la position fermée à la position ouverte.
